# FASCICULE DE BREVET EUROPEEN

(11) **EP 3 013 594 B1**
(45) Date de publication et mention de la délivrance du brevet: **22.01.2020**
(21) Numéro de dépôt: 14742281.0
(22) Date de dépôt: 25.06.2014
(51) Int. Cl.: B41M 5/26, B41M 7/00

(54) **PROCÉDÉ ET MACHINE DE FABRICATION D'UNE LENTILLE OPHTALMIQUE COMPORTANT UNE ÉTAPE DE MARQUAGE LASER POUR RÉALISER DES GRAVURES PERMANENTES SUR UNE SURFACE DE LADITE LENTILLE OPHTALMIQUE**
VERFAHREN UND MASCHINE ZUR HERSTELLUNG EINER OPTISCHEN LINSE MIT EINEM SCHRITT ZUR LASERMARKIERUNG ZWECKS HERSTELLUNG PERMANENTER ÄTZUNGEN AUF DER OBERFLÄCHE DIESER OPTISCHEN LINSE
METHOD AND APPARATUS FOR PRODUCING AN OPHTHALMIC LENS COMPRISING A STEP OF LASER MARKING IN ORDER TO PRODUCE PERMANENT ETCHINGS ON ONE SURFACE OF SAID OPHTHALMIC LENS

(30) Priorité: 28.06.2013 FR 1356325
(43) Date de publication de la demande: 04.05.2016
(73) Titulaire: Essilor International, 94220 Charenton-le-Pont (FR)
(72) Inventeur: DUBOIS, Frédéric, F-94220 Charenton-le-Pont (FR); MAURICE, Sébastien, F-94220 Charenton le Pont (FR)
(74) Mandataire: Santarelli
(86) Numéro de dépôt international: PCT/FR2014/051600
(87) Numéro de publication internationale: WO 2014/207381

(56) Documents cités:
- WO-A1-2012/084798
- DE-A1-102010 010 337
- US-A- 3 657 085

## Description

L'invention concerne les procédés de fabrication de lentilles ophtalmiques, comportant une étape de marquage laser pour réaliser des gravures permanentes sur une surface de la lentille ophtalmique.

On sait que les lentilles ophtalmiques sont soumises à différentes étapes de fabrication. Les procédés de fabrication généralement employés pour obtenir une lentille finie et taillée à la forme d'une monture particulière comportent typiquement des étapes au cours desquelles la lentille ophtalmique reçoit sur sa surface des marquages, dits permanents.

Ces marquages peuvent être formés par gravures, ou micro-gravures, représentant des points ou des croix et identifiant un point particulier (par exemple le centre optique de la lentille ophtalmique ou le point de référence de prisme pour une lentille progressive), ou des traits d'axes (par exemple pour indiquer l'axe horizontal selon lequel l'astigmatisme est corrigé), ou des formes délimitant une zone particulière (par exemple, la zone de vision de près ou la zone de vision de loin dans le cas d'une lentille progressive).

De même, il peut être nécessaire d'effectuer des marquages relatifs à l'identification de la lentille ou autres marquages commerciaux, ainsi qu'il ressort par exemple du document DE102010010337 A1.

Ces marquages permanents sont bien souvent réalisés sur une face concave de la lentille ophtalmique, appelée face arrière.

Dans un procédé de fabrication d'une lentille ophtalmique, cette dernière est bloquée, par exemple par sa face convexe, dite face avant, pour que la surface concave de sa face arrière puisse être usinée par tournage. Ensuite, cette surface concave usinée est polie avant de subir une ou plusieurs opérations de marquage. Suite à ces opérations dites plus généralement de surfaçage (usinage et polissage) et de marquage, la lentille ophtalmique est débloquée et nettoyée avant de subir des étapes de coloration et/ou de vernissage de la lentille (autrement dit l'application de différentes couches de compositions fonctionnelles diverses telles qu'un revêtement antireflet, un revêtement antibuée, un revêtement anti-rayures, un revêtement antisalissure, etc.) et/ou de traçage de la lentille (autrement dit la réalisation de marquages imprimés à l'aide d'encre, dits marquages temporaires). Les revêtements proposés et appliqués sont de plus en plus nombreux et diversifiés de sorte que le procédé de fabrication s'avère de plus en plus complexe et contraignant pour la lentille ophtalmique.

Les marquages permanents sont généralement réalisés à l'aide de machines de marquage laser émettant des rayonnements lumineux de longueur d'onde comprise entre environ 3µm et environ 50µm, autrement dit dans l'infrarouge moyen à lointain. Ces machines de marquage laser agissent sur la lentille ophtalmique comme un marquage thermique aboutissant à des déformations de matière sur la face arrière de cette lentille ophtalmique.

Ces déformations sont caractérisées par des caractéristiques géométriques, telles qu'un diamètre et/ou une profondeur, représentatives d'un point de fonctionnement de la machine de marquage laser.

Ces déformations sont en fait de petits renfoncements, appelés aussi cratères, formés sur la surface de la lentille ophtalmique. Ces renfoncements sont surmontés de rebords au niveau de cette surface qui ont une forme de petits pics de matière.

Les déformations sont sensibles aux contraintes thermiques que la lentille ophtalmique peut subir postérieurement à la réalisation de ces marquages. Or, les étapes de coloration et/ou de vernissage mentionnées plus haut peuvent être réalisées à des températures de l'ordre de 60°C à 90°C, voire au-delà. Par exemple, l'étape de vernissage peut comporter un étuvage à une température d'environ 75°C à environ 85°C, pour fixer le vernis sur la surface de la lentille ophtalmique.

Ces températures infligent des contraintes thermiques élevées à la lentille ophtalmique car elles sont proches de valeurs de seuil de relaxation de contraintes de la lentille (on parle aussi de contraintes de fluage). De ce fait, lorsque la lentille subit ces étapes, les renfoncements réalisés lors du marquage peuvent se reboucher au moins partiellement (par un resserrement des rebords, voire par un resserrement de parois internes aux renfoncements). Ainsi, lorsque la lentille ophtalmique a subi ces étapes et qu'elle est finie, ou presque, les marquages dits permanents peuvent être moins visibles, voire avoir au moins partiellement disparus.

Le point de fonctionnement de la machine de marquage laser n'est pas sans effet sur la conformité des marquages réalisés sur la surface.

Ainsi un très grand diamètre des renfoncements peut permettre de palier aux contraintes thermiques fortes qu'une lentille ophtalmique peut subir, toutefois, il en affectera la visibilité car ces marquages seront trop visibles sur la lentille finie et pourront gêner le porteur de cette lentille en plus d'être inesthétiques. Au contraire, un trop faible diamètre des renfoncements ne devrait pas gêner le porteur mais peut affecter la conformité car ces renfoncements pourraient ne plus être visibles du tout.

Généralement, des essais sont à mener en fonction des procédés de fabrication, en particulier en fonction des étapes postérieures aux marquages, afin de déterminer un point de fonctionnement optimal de la machine de marquage laser, ce qui nuit à la productivité.

L'invention vise à fournir un procédé de fabrication d'une lentille ophtalmique permettant de déterminer simplement des paramètres de marquage adéquats permettant tout à la fois une bonne productivité et une bonne conformité, en particulier en termes de visibilité, des gravures réalisées sur la surface de la lentille ophtalmique.

L'invention a ainsi pour objet, sous un premier aspect, un procédé de fabrication d'une lentille ophtalmique tel que décrit dans la revendication 1.

Pour la mise en œuvre de l'étape de marquage de la lentille ophtalmique, le procédé selon l'invention tient compte des étapes post-marquage de cette lentille ophtalmique, qui mettent en œuvre des contraintes thermiques sévères sur les gravures réalisées sur la lentille ophtalmique.

On entend par contraintes thermiques sévères des températures qui sont proches de valeurs de seuil de relaxation de contraintes de la lentille ophtalmique, lesquelles valeurs sont notamment fonction du matériau dans lequel la lentille ophtalmique est réalisée.

Le point de fonctionnement déterminé est un point de fonctionnement fixe en ce sens qu'un seul point de fonctionnement est déterminé par le procédé selon l'invention. L'étape de marquage est par conséquent mise en œuvre à l'aide d'une machine de marquage laser qui est réglée avec ce point de fonctionnement déterminé pour toute la durée du cycle de marquage.

On notera que la détermination du point de fonctionnement est basée sur la caractérisation d'une perte de visibilité prévisible (autrement dit d'une disparition partielle ou totale) des marques permanentes à réaliser sur la surface de la lentille ophtalmique, laquelle perte de visibilité est due aux étapes postérieures à l'étape de marquage qui sont contraignantes thermiquement pour la lentille ophtalmique.

En d'autres termes, il s'agit dans le procédé selon l'invention de caractériser l'effet de ces étapes postérieures au marquage afin d'ajuster le point de fonctionnement de la machine de marquage laser pour garantir une bonne visibilité (dans les limites de la conformité demandée) des marques permanentes sur la lentille ophtalmique finie.

On observera que la valeur représentative de la déformation de la lentille ophtalmique est une mesure représentative, au moins sur une zone de traitement de la lentille, appelée aussi zone affectée thermiquement par le marquage, des contraintes post-marquage sur les gravures à réaliser sur la surface. Il s'agit donc d'une valeur parfaitement représentative des conséquences prévisibles des contraintes thermiques que la lentille ophtalmique et en particulier ses gravures subissent du fait des étapes prédéterminées dites de post-marquage. Il s'agit en outre d'une valeur parfaitement représentative de la difficulté à préserver la visibilité des gravures dès leur marquage jusqu'à ce que la lentille ophtalmique soit finie.

Le procédé selon l'invention permet de déterminer le point de fonctionnement de la machine de marquage laser de façon particulièrement simple et commode, à partir de valeurs qu'il est possible d'obtenir par des outils de calcul standards en matière d'optique, ces outils de calcul permettant, à partir d'un fichier comportant un ensemble de données géométriques et thermiques en un nombre fini de points (il y a plus ou moins de points suivant le fichier et le nombre d'étapes prédéterminées post-marquage), de caractériser l'effet des étapes postérieures au marquage sur les gravures de la lentille ophtalmique.

Ainsi, le procédé selon l'invention permet, par des calculs relativement simples, de déterminer le point de fonctionnement optimal de la machine de marquage laser.

Bien entendu, c'est sur la base d'un étalonnage aisé à réaliser, par un nombre d'essais raisonnable, que sont fixées les règles de déduction du point de fonctionnement de la machine de marquage laser à partir de la valeur représentative de la déformation de la matière de la lentille ophtalmique et des caractéristiques géométriques des gravures.

Cet étalonnage peut en outre être exprimé sous la forme d'un tableau de correspondance relativement simple, ainsi qu'expliqué ci-après.

Ainsi, le procédé selon l'invention permet de déterminer simplement des paramètres de marquage adéquats permettant tout à la fois une bonne productivité et une bonne conformité, en particulier en termes de visibilité, des gravures réalisées sur la surface de la lentille ophtalmique.

Selon des caractéristiques préférées, simples, commodes et économiques du procédé selon l'invention :
- ladite étape de déterminer ladite étape de déterminer la valeur représentative de la déformation de ladite lentille ophtalmique sur ladite au moins une zone de traitement comporte l'étape de traiter des caractéristiques desdites contraintes thermiques sévères en prenant en compte des caractéristiques individuelles spécifiques à chaque dite étape prédéterminée postérieure à ladite étape de marquage laser sur la surface et en prenant en compte l'ensemble desdites caractéristiques individuelles ;
- lesdites caractéristiques individuelles sont représentatives d'une température de traitement et/ou d'un temps de traitement ;
- ladite au moins une étape prédéterminée postérieure à ladite étape de marquage laser est une étape de coloration ou de vernissage de ladite lentille ophtalmique ;
- le procédé comporte une étape de vérification de la conformité, en termes de visibilité, des gravures réalisées lors de ladite étape de marquage laser, après que ladite lentille ophtalmique ait en outre subit ladite au moins une étape prédéterminée postérieure à ladite étape de marquage laser ;
- ledit point de fonctionnement déterminé comporte une valeur représentative d'un diamètre final desdites gravures et/ou une profondeur finale desdites gravures ;
- lesdites gravures présentent chacune une forme générale sensiblement circulaire et sont chacune formées par un renfoncement autour duquel est ménagé un rebord ; et/ou
- ladite au moins une zone de traitement sur la surface est située dans une zone sensiblement annulaire autour d'une dite gravure.

L'invention a aussi pour objet, sous un quatrième aspect, une machine de marquage laser telle que décrite dans la revendication 9.

Selon des caractéristiques préférées, commodes et économiques de la machine selon l'invention, il s'agit d'une machine de marquage laser de type CO₂ configurée pour émettre des rayonnements lumineux de longueur d'onde comprise entre environ 8µm et environ 20µm.

On va maintenant poursuivre l'exposé de l'invention par la description d'un exemple de réalisation, donnée ci-après à titre illustratif et non limitatif, en référence aux dessins annexés sur lesquels :
- la figure 1 est un schéma-blocs illustrant différentes étapes de fonctionnement d'un procédé de fabrication d'une lentille ophtalmique, comportant notamment une étape de marquage laser ;
- la figure 2 représente schématiquement une machine de marquage laser mettant en œuvre notamment l'étape de marquage laser visible sur la figure 1 ;
- la figure 3 illustre une table de correspondance (« look up table » en anglais), sous la forme graphique, de niveaux de difficultés de marquage prédéterminés ;
- la figure 4 est un schéma-blocs illustrant différentes étapes de fonctionnement du procédé de fabrication ;
- la figure 5 illustre, schématiquement, la surface d'une lentille ophtalmique pourvue de gravures réalisées lors de l'étape de marquage laser visible sur la figure 1 avec la machine illustrée sur la figure 2 ;
- la figure 6 est une vue de détail d'une gravure sur la surface de la lentille ophtalmique illustrée sur la figure 5 ;
- la figure 7 est une vue prise en coupe selon VII-VII sur la figure 6 ;
- la figure 8 est un schéma-blocs illustrant les étapes pour construire la table de correspondance ; et
- la figure 9 montre, schématiquement, une interface de communication client-serveur comportant des dispositifs configurés pour transférer le point de fonctionnement déterminé par le procédé de fabrication vers une unité de contrôle et de commande distante.

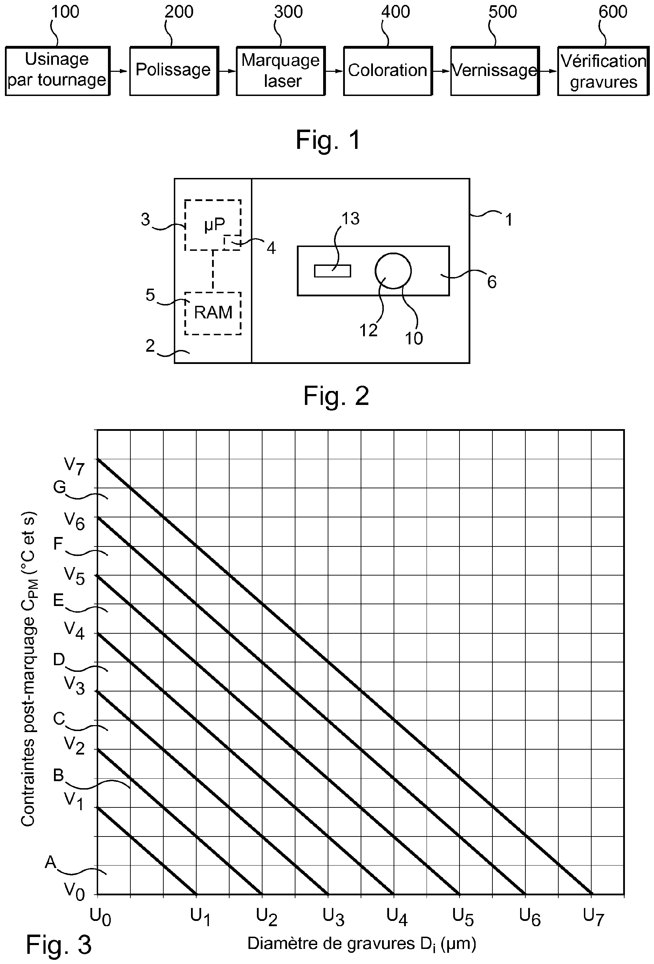

La figure 1 illustre différentes étapes de fonctionnement d'un procédé de fabrication d'une lentille ophtalmique 10, aussi appelée verre de lunettes (visible figure 2), comportant :
- une étape 100 d'usinage par tournage de la surface 12 (visible figure 2) ici d'une face arrière de la lentille ophtalmique, pour lui procurer une fonction optique prédéterminée (étape d'ébauche et/ou de finition), réalisée à l'aide par exemple d'une machine d'usinage de précision appelée « digital surfacing » en anglais (non représentée) ;
- une étape 200 de polissage de la surface usinée de la lentille ophtalmique, pour lui fournir une transparence adéquate au domaine ophtalmique, réalisée à l'aide par exemple d'un polissoir (non représenté) ;
- une étape 300 de marquage laser de la surface polie de la lentille ophtalmique, pour y réaliser des gravures permanentes à l'aide par exemple d'une machine de marquage laser 1 (visible figure 2) ;
- une étape 400 de coloration au moins de la surface marquée de la lentille ophtalmique, pour lui fournir au moins une teinte prédéterminée appliquée à l'aide par exemple d'une machine de traitement par trempe et étuvage (non représentée) ;
- une étape 500 de vernissage au moins de la surface marquée et colorée de la lentille ophtalmique, pour lui fournir au moins un traitement prédéterminé par l'application par exemple d'un revêtement antireflet, et/ou d'un revêtement antibuée, et/ou d'un revêtement anti-rayures, et/ou d'un revêtement antisalissure à l'aide par exemple d'une machine de traitement par trempe et étuvage et/ou d'une machine de traitement par plasma ou par évaporation (non représentées) ; et
- une étape 600 de vérification de la conformité, en termes de visibilité, des gravures préalablement réalisées à l'étape 300 sur la surface de la lentille ophtalmique, à l'aide par exemple d'un dispositif muni d'un capteur visuel.

On observera que le procédé de fabrication peut par exemple être dépourvu de l'étape de coloration ou de ou des étapes de vernissage de la lentille ophtalmique 10.

La figure 2 illustre une machine de marquage laser 1 à commande numérique, la commande numérique désignant l'ensemble des matériels et logiciels ayant pour fonction de donner des instructions de mouvements à tous les organes de la machine de marquage 1.

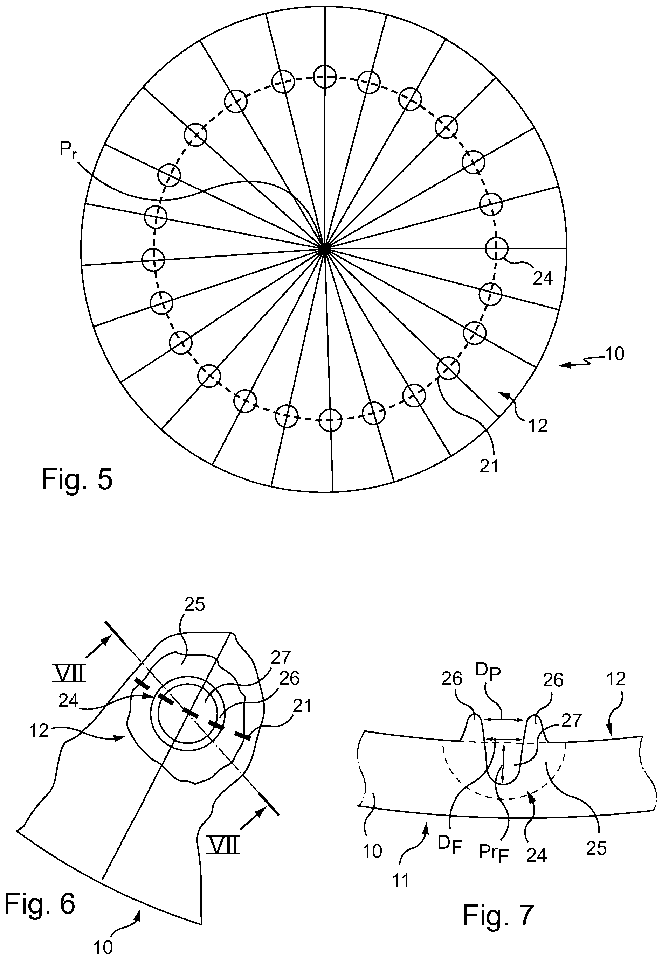

Cette machine 1 est configurée pour réaliser des gravures permanentes 24 (visibles figures 6 et 7) sur la surface 12 de la lentille ophtalmique 10.

Pour cela, la machine 1 comporte une broche 13 portant un outil de marquage, ici un laser au dioxyde de carbone (laser à gaz de type CO₂) configuré pour émettre des rayonnements lumineux de longueur d'onde comprise entre environ 8µm et environ 20µm.

La machine 1 comporte en outre une unité de contrôle et de commande 2 pourvue d'un système de traitement de données comportant un microprocesseur 3 muni d'une mémoire 4, notamment non volatile, lui permettant de charger et stocker un logiciel, autrement dit un programme d'ordinateur, qui, lorsqu'il est exécuté dans le microprocesseur 3, permet la mise en œuvre d'un procédé de polissage.

Cette mémoire non volatile 4 est par exemple de type ROM ("Read Only Memory" en anglais).

L'unité 2 comporte en outre une mémoire 5, notamment volatile, permettant de mémoriser des données durant l'exécution du logiciel et la mise en œuvre du procédé.

Cette mémoire volatile 5 est par exemple de type RAM ou EEPROM (respectivement "Random Access Memory" et "Electrically Erasable Programmable Read Only Memory" en anglais).

La machine 1 comporte de plus une ouverture vitrée 6 adaptée à rendre visible la surface 12 de la lentille ophtalmique 10 sur laquelle agit la machine 1, laquelle lentille ophtalmique 10 est portée par un support prédéterminé (non représenté).

Cette ouverture vitrée 6 permet, lors de la mise en œuvre du procédé, à un utilisateur de cette machine 1 de surveiller le bon déroulement du procédé en visionnant la lentille ophtalmique 10 dans la machine 1.

Pour marquer la lentille ophtalmique 10, on a besoin de connaître précisément certains paramètres de marquage, tels que le diamètre D_{F} et la profondeur Pr_{F} des gravures 24 à réaliser.

Ces paramètres D_{F} et Pr_{F} sont des consignes données à la machine 1.

Pour cela, le procédé selon l'invention comporte une étape de détermination de chacun de ces paramètres.

On va maintenant décrire en référence aux figures 3 à 7 les étapes de détermination du diamètre D_{F} et de la profondeur Pr_{F} des gravures 24 à réaliser, prenant en considération les étapes de coloration et de vernissage 400 et 500 à réaliser après l'étape de marquage laser 300.

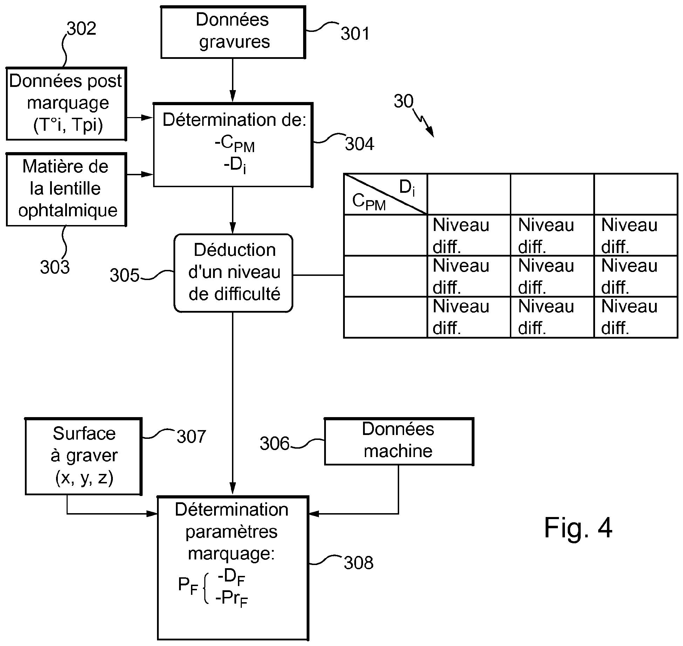

La figure 4 est un schéma-blocs des étapes permettant la détermination des paramètres mentionnés ci-dessus D_{F} et Pr_{F}.

L'unité de contrôle et de commande 2 est configurée pour recevoir à l'étape 301 des données caractéristiques de l'étape de marquage prédéterminée, qui correspondent ici à des caractéristiques géométriques et éventuellement de personnalisation des gravures 24 à réaliser.

L'unité 2 est en outre configurée pour recevoir à l'étape 302 des données caractéristiques des étapes post-marquage prédéterminées, ici les étapes de coloration 400 et de vernissage 500. Ces données correspondent ici à des valeurs de températures T°i auxquelles est soumise la lentille ophtalmique 10, par exemple les températures des bains dans lesquels est trempée cette lentille, ainsi qu'à des valeurs temporelles Tpi relatives aux périodes durant lesquelles la lentille ophtalmique 10 est soumise à ces température T°i, ou, en d'autres termes, les durées pendant lesquelles cette lentille reste par exemple dans les bains.

L'unité 2 est en outre configurée pour recevoir à l'étape 303 des données caractéristiques de la matière de la lentille ophtalmique 10, laquelle peut être formée d'un ou de plusieurs matériaux prédéterminés. Ces données caractéristiques sont par exemple liées au comportement du ou des matériaux face à des contraintes thermiques sévères. Plus précisément, ces données correspondent par exemple à des valeurs de seuil de relaxation de contraintes ainsi qu'à l'indice de réfraction du ou des matériaux.

L'unité 2 est configurée pour déterminer à l'étape 304 une valeur représentative des contraintes post-marquage C_{PM} sur au moins une zone de traitement 25 (visible figures 6 et 7) de la surface 12 où sont réalisées les gravures 24, ainsi qu'un diamètre initial Dᵢ des gravures 24 à réaliser, à partir des données post-marquage qui sont représentatives des contraintes thermiques sévères, à partir des données relatives à la matière de la lentille ophtalmique 10 et à partir des données de gravure reçues respectivement aux étapes 302, 303 et 301.

On notera que la valeur représentative des contraintes post-marquage C_{PM} correspond en fait à une valeur représentative de la déformation de la lentille ophtalmique 10 du fait des étapes post-marquages.

Cette étape 303 permet de caractériser l'effet des étapes postérieures au marquage sur les gravures 24.

L'unité 2 est configurée pour déduire à l'étape 305 un niveau de difficulté intrinsèque à l'étape de marquage de la surface 12 à partir de la valeur C_{PM} de déformation de la lentille ophtalmique 10 et du diamètre initial Dᵢ des gravures 24 à réaliser. Ce niveau de difficulté intrinsèque au marquage de la surface 12 correspond en d'autres termes à un niveau de contraintes post-marquage.

Ce niveau de difficulté intrinsèque au marquage de la surface 12 est sélectionné dans une table de correspondance 30, visible sous la forme d'un graphique à la figure 2 et sous la forme d'une matrice à la figure 3, construite préalablement et mémorisée dans l'unité 2.

Cette table de correspondance 30 contient une pluralité de valeurs de niveau de difficulté intrinsèque associée à différentes plages prédéterminées de valeurs V₀ à V₇ de contraintes C_{PM} et U₀ à U₇ de diamètres Dᵢ.

Les valeursV₀ à V₇ de contraintes C_{PM} sont exprimées en degrés Celsius et secondes tandis que les valeurs U₀ à U₇ de diamètres Dᵢ sont exprimées en micron.

Les valeursV₀ à V₇ de contraintes C_{PM} et les valeurs U₀ à U₇ de diamètres Dᵢ correspondent respectivement aux ordonnées et aux abscisses de ladite table de correspondance 30.

On distingue sept niveaux de difficulté respectivement référencés de A à G et représentatifs d'un niveau de difficulté de plus en plus élevé.

La table de correspondance 30 comporte des seuils de niveaux de difficultés A à G représentés par des droites ayant une pente négative, chacune de ces droites correspondant à la limite entre deux niveaux de difficulté successifs.

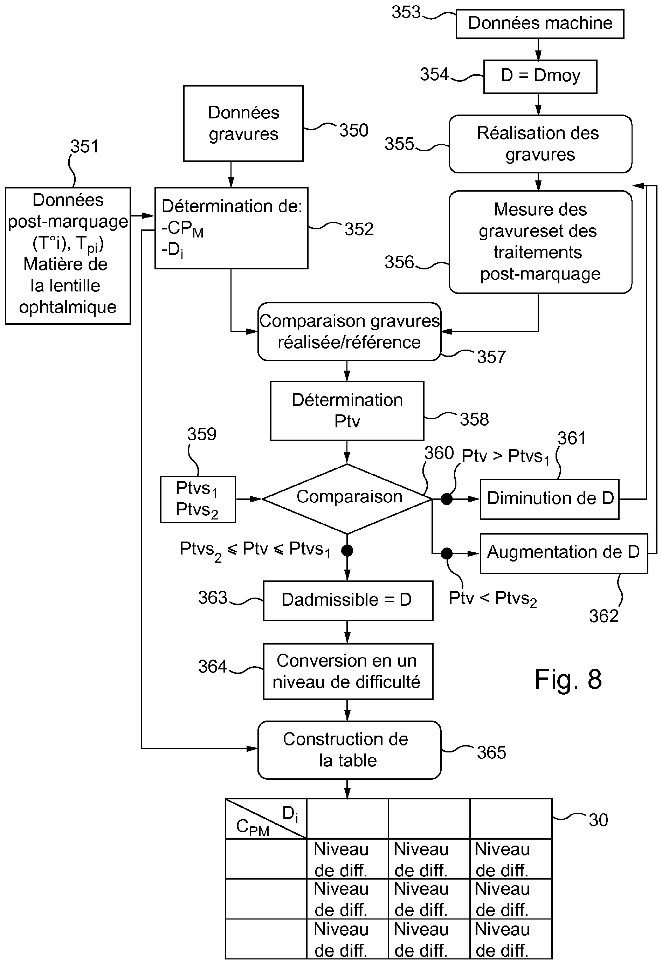

On verra par la suite en référence à la figure 8 comment est construite cette table de correspondance 30.

L'unité 2 est en outre configurée pour recevoir à l'étape 306 des paramètres propres à la machine de marquage utilisée 1.

L'unité de contrôle et de commande 2 est configurée pour recevoir à l'étape 307 un fichier de surface qui est pourvu de caractéristiques géométriques représentatives de la surface 12, sous la forme de coordonnées x, y, z, θ, en un nombre fini de points.

L'unité 2 est configurée pour déterminer à l'étape 308 le point de fonctionnement P_{F} optimal de la machine de marquage 1 à partir du niveau de difficulté A-G, du laser de cette machine de marquage 1 et de la géométrie de la lentille ophtalmique 10.

Ce point de fonctionnement optimal P_{F} est caractérisé par des paramètres de marquage, et plus précisément par le diamètre final D_{F} et la profondeur finale Pr_{F} des gravures 24 à réaliser sur la surface 12 de la lentille ophtalmique 10.

Cette étape 308 permet ainsi d'ajuster le point de fonctionnement de la machine de marquage laser 1 pour garantir une bonne visibilité (dans les limites de la conformité demandée) des gravures 24 sur la lentille ophtalmique 10 finie. Ces paramètres cumulés sont représentatifs de la géométrie des gravures 24, lesquels sont déterminants pour leur conformité.

Ainsi, l'étape de marquage 300 du procédé de fabrication peut être mise en œuvre dans la machine de marquage laser 1.

La figure 5 montre la lentille ophtalmique 10 gravée et finie, autrement dit après les étapes post-marquage de coloration 400, de vernissage 500 et éventuellement de vérification des gravures 600.

Les gravures 24 sont ici réalisées sur la surface 12 de la face arrière de la lentille ophtalmique 10. Ces gravures sont régulièrement réparties le long d'un cercle 21 de diamètre prédéterminé et sont chacune à égale distance d'un point de référence Pᵣ ici correspondant au centre de la surface 12 de la lentille ophtalmique 10.

Les figures 6 et 7 montrent plus en détails une des gravures 24 réalisée sur la lentille ophtalmique 10.

On observera que chaque gravure 24 se trouve dans une zone de traitement 25 qui est une zone affectée thermiquement par l'étape de marquage laser 300.

C'est dans ces zones affectées thermiquement 25 de la lentille ophtalmique 10 que les contraintes thermiques dues aux étapes de post-marquage sont les plus sévères.

La gravure 24 présente la forme d'un cratère pourvu d'un renfoncement circulaire 27 ayant le diamètre final D_{F} et la profondeur finale Pr_{F} déterminés à l'étape 308 et un rebord annulaire 26 ménagé autour d'un bord libre du renfoncement 27.

Le rebord annulaire 26 est issu de matière déformée lors de l'étape de marquage laser 300 et présente un diamètre D_{P} supérieur au diamètre final D_{F}.

Ici, les gravures 24 réalisées sur la surface 12 de la lentille ophtalmique 10 sont parfaitement visibles et plus généralement conforme aux gravures souhaitées. Ceci est dû au fait que l'étape de marquage laser 300 est mise en œuvre avec un réglage déterminé du point de fonctionnement de la machine de marquage laser 1.

En effet, ce réglage déterminé permet aux gravures d'être et de rester visibles et conformes malgré les contraintes thermiques sévères qu'elles subissent lors des étapes post-marquage, lesquelles contraintes font, en pratique, que le rebord annulaire 26 et/ou l'espace interne au renfoncement 27 se déforment et peuvent réduire le diamètre de la gravure 24.

La figure 8 est un schéma-blocs des étapes permettant la construction de la table de correspondance de niveaux de difficulté 30, mémorisée dans la mémoire 4 du système de traitement de données de l'unité 2.

Cette table de correspondance peut être construite directement par l'unité 2 ou préalablement par un autre système de traitement de données et chargée dans la mémoire 4 du système de l'unité 2.

Pour construire la table de correspondance de niveaux de difficulté 30, on choisit, à une étape 350, des gravures de référence à réaliser sur une surface à marquer et on obtient des données caractéristiques de la géométrie et éventuellement de la personnalisation des gravures 24 comme à l'étape 301 décrite ci-dessus.

On obtient en outre à l'étape 351 des données caractéristiques T°i et Tpi d'étapes post-marquage prédéterminées ainsi que des données caractéristiques de la matière de la lentille ophtalmique 10, comme aux étapes 302 et 303 décrites ci-dessus

A l'étape 352 est déterminée une valeur représentative des contraintes post-marquage C_{PM} ainsi qu'un diamètre initial Dᵢ des gravures 24 à réaliser, comme à l'étape 304 décrite ci-dessus.

On obtient en outre à l'étape 353 des paramètres propres d'une machine de marquage.

A l'étape 354, on choisit comme valeur de diamètre initial de gravure à réaliser un diamètre maximal dans la gamme de diamètres réalisables par la machine, laquelle gamme est en outre choisie en fonction de la matière de la lentille ophtalmique à graver.

A l'étape 355, la machine de marquage réalise les gravures de référence choisies sur la surface d'une lentille ophtalmique et cette dernière subit en outre les étapes post-marquage prédéterminées.

Ensuite, à l'étape 356, on mesure le diamètre et la profondeur des gravures réalisées sur la surface de la lentille ophtalmique gravée et traitée.

Puis on procède, à l'étape 357, à la comparaison entre les gravures réalisées sur la surface de la lentille ophtalmique, après les traitements post-marquage, et les gravures de référence choisies, comparaison à partir de laquelle on déduit une gravure dite résiduelle.

Cette gravure résiduelle est générée par des déformations de matière de la lentille ophtalmique du fait des étapes de traitement post-marquage.

On détermine ainsi à l'étape 358 une valeur d'un écart Ptv, appelé « peak to valley » en anglais, représentatif des variations de diamètre et de profondeur des gravures résiduelles.

On compare ensuite à une étape 360 la valeur de l'écart Ptv déterminée à des valeurs seuil d'écarts Ptvs₁ et Ptvs₂ obtenues à une étape 359.

Si la comparaison résulte en une valeur Ptv supérieure à la valeur Ptvs₁, cela signifie que le diamètre choisi ne fait pas partie de la plage admissible de diamètres et qu'il faut donc diminuer le diamètre à une étape 361. Le cas échéant, il est nécessaire de graver puis traiter une nouvelle surface de la lentille ophtalmique, la mesurer puis la comparer (étapes 355 à 357).

Si la comparaison résulte en une valeur Ptv inférieure à la valeur Ptvs₂, cela signifie que le diamètre choisi ne fait pas partie de la plage admissible de diamètres et qu'il faut donc augmenter le diamètre à une étape 362. Le cas échéant, il est nécessaire de graver puis traiter une nouvelle surface de la lentille ophtalmique, la mesurer puis la comparer (étapes 355 à 357).

Si la comparaison résulte en une valeur Ptv à la fois inférieure à la valeur Ptvs₁, et supérieure à la valeur Ptvs₂, cela signifie que le diamètre choisi fait partie de la plage admissible de diamètres et on en déduit le diamètre maximal admissible (noté Dᵢ) des gravures à une étape 363.

On convertit ensuite à l'étape 364 le diamètre maximal déduit en un niveau de difficulté, allant de A à G.

La valeur de Ptvs correspond au seuil de passage d'un niveau de difficulté à un autre.

Autrement dit, cette valeur de Ptvs correspond aux droites de pentes égales et négatives, dites iso Ptv, vues précédemment à la figure 3.

On peut ainsi construire et compléter la table de correspondance 30 à une étape 365 en attribuant un niveau de difficulté au couple formé par la valeur de diamètre maximal admissible Dᵢ et la valeur de contrainte C_{PM}, jusqu'à obtenir une table de correspondance complète 30.

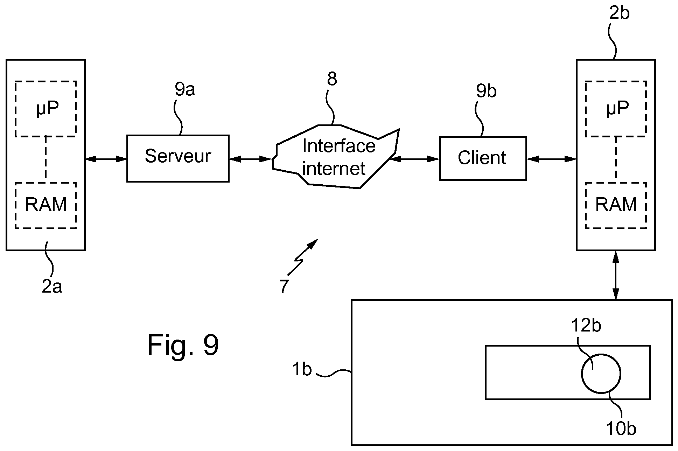

La figure 9 illustre une interface de communication client-serveur 7 comportant un côté dit fournisseur 9a et un autre côté dit client 9b, ces deux côtés communicant via une interface internet 8.

Le côté fournisseur comporte un serveur 9a relié à une unité de commande et de contrôle 2a du même type que celle de la figure 1, mais cette fois-ci non intégrée à une machine de marquage laser, ce serveur 9a étant configuré pour communiquer avec l'interface internet 8.

Le côté client 9b est configuré pour communiquer avec l'interface internet 8, et est relié à une unité de contrôle et de commande 2b du même type que celle du côté fournisseur.

En outre, l'unité 2b côté client est reliée à une machine de marquage laser 1b du même type que celle de la figure 1 pour réaliser des gravures sur une surface 12b d'une lentille ophtalmique 10b.

L'unité 2b est configurée pour recevoir, côté client, un fichier de données caractéristiques des gravures à réaliser sur la surface 12b, des données caractéristiques des étapes post-marquage, des données caractéristiques de paramètres propres à la machine de marquage laser 1b utilisée, ainsi que des données caractéristiques de la matière de la lentille ophtalmique 10b utilisée.

Cette unité 2b envoie par l'intermédiaire de l'interface internet 8 et du serveur 9a ces données à l'unité 2a côté fournisseur pour la détermination du point de fonctionnement de la machine laser 1.

Cette unité 2a exécute via son système de traitement de données le programme d'ordinateur qu'il contient pour mettre en œuvre l'étape de détermination du point de fonctionnement de la machine laser 1b du procédé de fabrication de la lentille ophtalmique 10b, pour marquer la surface 12b de cette lentille ophtalmique 10b.

L'unité 2a envoie, par l'intermédiaire du serveur 9a et de l'interface internet 8 ce point de fonctionnement déterminé à l'unité de commande et de contrôle 2b côté client.

Cette unité 2b est configurée pour exécuter un logiciel pour la mise en œuvre d'un procédé de fabrication de la lentille ophtalmique 10b, en utilisant les paramètres reçus, afin de réaliser les gravures sur la lentille ophtalmique 10b.

Dans des variantes non illustrées :
- la table de niveau de difficulté ne présente pas 7 niveaux de difficultés, mais cette table présente moins ou plus de niveaux de difficultés, par exemple entre 2 et 10 ;
- l'unité de commande et de contrôle ne comporte pas de microprocesseur, mais plutôt un microcontrôleur ;
- l'interface de communication peut permettre la communication via un autre réseau que le réseau internet, par exemple un réseau intranet ou un réseau privé sécurisé ; et/ou
- l'interface de communication 8 peut aussi permettre de transférer l'ensemble du programme d'ordinateur vers le système de traitement de données distant 2b pour la mise en œuvre de certaines étapes du procédé dans la machine 1b (étape de détermination du point de fonctionnement et étape de marquage) et d'autres étapes du procédé dans plusieurs autres machines (étapes d'usinage, de coloration et de vernissage).

On rappelle plus généralement que l'invention ne se limite pas aux exemples décrits et représentés.

## Revendications

1. Procédé de fabrication d'une lentille ophtalmique (10) comportant une étape de marquage laser (300) pour réaliser des gravures permanentes (24) sur une surface (12) de ladite lentille ophtalmique (10), au moins une étape prédéterminée (400, 500) postérieure à ladite étape de marquage laser (300) et mettant en œuvre des contraintes thermiques sévères qui sont appliquées à ladite surface (12) et une étape de détermination d'un point de fonctionnement (P_{F}) d'une machine de marquage laser (1) configurée pour mettre en œuvre ladite étape de marquage laser (300) à partir de caractéristiques géométriques (Di) desdites gravures (24) à réaliser sur ladite surface (12), **caractérisé en ce que** ladite étape de détermination dudit point de fonctionnement (P_{F}) comporte les étapes suivantes :
- déterminer (304) une valeur (C_{PM}) représentative de la déformation de ladite lentille ophtalmique (10) sur au moins une zone de traitement (25) de ladite surface (12) où sont réalisées lesdites gravures (24), à partir desdites contraintes thermiques sévères et à partir de données relatives à un matériau prédéterminé dans lequel est formée ladite lentille ophtalmique (10) ;
- déduire (308) ledit point de fonctionnement (P_{F}) de ladite valeur (C_{PM}) représentative de la déformation de ladite lentille ophtalmique (10) sur ladite au moins une zone de traitement (25) et desdites caractéristiques géométriques (Di) desdites gravures (24) ;
ladite étape de déterminer ledit point de fonctionnement (P_{F}) comportant les étapes suivantes :
- déduire (305) un niveau de contraintes post-marquage (A-G) à partir de la valeur (C_{PM}) représentative de la déformation de ladite lentille ophtalmique (10) et desdites caractéristiques géométriques (Di) desdites gravures (24) ; et
- sélectionner (308) ledit point de fonctionnement (P_{F}) à partir dudit niveau de difficulté (A-G), de caractéristiques géométriques (x, y, z) de ladite surface (12) de ladite lentille ophtalmique (10) à marquer et de paramètres propres à ladite machine de marquage laser (1) utilisée ;
avec ledit niveau de contraintes post-marquage (A-G) est choisi parmi plusieurs niveaux de contraintes post-marquage (A-G) prédéterminés en fonction de plages prédéterminées de caractéristiques géométriques (Dᵢ) de gravures et de plages prédéterminées de valeurs (C_{PM}) représentatives de la déformation de la lentille ophtalmique.

2. Procédé selon la revendication 1, **caractérisé en ce que** ladite étape de déterminer la valeur (C_{PM}) représentative de la déformation de ladite lentille ophtalmique (10) sur ladite au moins une zone de traitement (25) comporte l'étape de traiter des caractéristiques (T°ᵢ, Tpᵢ) desdites contraintes thermiques sévères en prenant en compte des caractéristiques individuelles spécifiques à chaque dite étape prédéterminée (400, 500) postérieure à ladite étape de marquage laser (300) sur la surface (12) et en prenant en compte l'ensemble desdites caractéristiques individuelles.

3. Procédé selon la revendication 2, **caractérisé en ce que** lesdites caractéristiques individuelles sont représentatives d'une température de traitement (T°ᵢ) et/ou d'un temps de traitement (Tpᵢ).

4. Procédé selon l'une quelconque des revendications 1 à 3, **caractérisé en ce que** ladite au moins une étape prédéterminée postérieure à ladite étape de marquage laser (300) est une étape de coloration (400) ou de vernissage (500) de ladite lentille ophtalmique (10).

5. Procédé selon l'une quelconque des revendications 1 à 4, **caractérisé en ce qu'**il comporte une étape de vérification (600) de la conformité, en termes de visibilité, des gravures (24) réalisées lors de ladite étape de marquage laser (300), après que ladite lentille ophtalmique (10) ait en outre subit ladite au moins une étape prédéterminée (400, 500) postérieure à ladite étape de marquage laser (300).

6. Procédé selon l'une quelconque des revendications 1 à 5, **caractérisé en ce que** ledit point de fonctionnement (P_{F}) déterminé comporte une valeur représentative d'un diamètre final (D_{F}) desdites gravures (24) et/ou une profondeur finale (Pr_{F}) desdites gravures (24).

7. Procédé selon l'une quelconque des revendications 1 à 6, **caractérisé en ce que** lesdites gravures (24) présentent chacune une forme générale sensiblement circulaire et sont chacune formées par un renfoncement (27) autour duquel est ménagé un rebord (26).

8. Procédé selon l'une quelconque des revendications 1 à 7, **caractérisé en ce que** ladite au moins une zone de traitement (25) sur la surface (12) est située dans une zone sensiblement annulaire autour d'une dite gravure (24).

9. Machine de marquage laser configurée pour réaliser des gravures permanentes (24) sur une surface (12) d'une lentille ophtalmique (10) et comportant une unité de contrôle et de commande (2) comportant des éléments systémiques (3, 4, 5) configurés pour exécuter un programme d'ordinateur comportant des instructions configurées pour mettre en œuvre chacune des étapes du procédé selon l'une quelconque des revendications 1 à 8.

10. Machine selon la revendication 9, **caractérisée en ce qu'**il s'agit d'une machine de marquage laser (1) de type CO₂ configurée pour émettre des rayonnements lumineux de longueur d'onde comprise entre environ 8µm et environ 20µm.

## Patentansprüche

1. Verfahren zur Fertigung eines Brillenglases (10), umfassend einen Lasermarkierungsschritt (300) zum Ausführen permanenter Gravuren (24) auf einer Oberfläche (12) des Brillenglases (10), mindestens einen vorbestimmten Schritt (400, 500), der nach dem Lasermarkierungsschritt (300) stattfindet und starke thermische Beanspruchungen implementiert, die auf die Oberfläche (12) angewandt werden, und einen Schritt des Bestimmens eines Betriebspunktes (P_{F}) einer Lasermarkierungsmaschine (1), die dazu konfiguriert ist, den Lasermarkierungsschritt (300) ausgehend von geometrischen Merkmalen (Di) der auf der Oberfläche (12) auszuführenden Gravuren (24) zu implementieren, **dadurch gekennzeichnet, dass** der Schritt des Bestimmens des Betriebspunktes (P_{F}) die folgenden Schritte umfasst:
- Bestimmen (304) eines Werts (C_{PM}), der für die Verformung des Brillenglases (10) in mindestens einem Bearbeitungsbereich (25) der Oberfläche (12), in dem die Gravuren (24) ausgeführt werden, repräsentativ ist, ausgehend von den starken thermischen Beanspruchungen und ausgehend von Daten bezüglich eines vorbestimmten Materials, aus dem das Brillenglas (10) gebildet ist;
- Herleiten (308) des Betriebspunktes (P_{F}) aus dem Wert (C_{PM}), der für die Verformung des Brillenglases (10) in dem mindestens einen Bearbeitungsbereich (25) repräsentativ ist, und aus den geometrischen Merkmalen (Di) der Gravuren (24);
wobei der Schritt des Bestimmens des Betriebspunktes (P_{F}) die folgenden Schritte umfasst:
- Herleiten (305) eines Beanspruchungsniveaus im Nachgang des Markierens (A-G) ausgehend von dem Wert (C_{PM}), der für die Verformung des Brillenglases (10) repräsentativ ist, und von den geometrischen Merkmalen (Di) der Gravuren (24); und
- Auswählen (308) des Betriebspunktes (P_{F}) ausgehend von dem Schwierigkeitsniveau (A-G), von geometrischen Merkmalen (x, y, z) der Oberfläche (12) des zu markierenden Brillenglases (10) und von spezifischen Parametern der eingesetzten Lasermarkierungsmaschine (1);
wobei das Beanspruchungsniveau im Nachgang des Markierens (A-G) unter mehreren vorbestimmten Beanspruchungsniveaus im Nachgang des Markierens (A-G) in Abhängigkeit von vorbestimmten Bereichen geometrischer Merkmale (Di) von Gravuren und von vorbestimmten Bereichen von Werten (C_{PM}), die für die Verformung des Brillenglases repräsentativ sind, gewählt wird.

2. Verfahren nach Anspruch 1, **dadurch gekennzeichnet, dass** der Schritt des Bestimmens des Wertes (C_{PM}), der für die Verformung des Brillenglases (10) in dem mindestens einen Bearbeitungsbereich (25) repräsentativ ist, den Schritt des Verarbeitens der Merkmale (T°ᵢ, Tpᵢ) der starken thermischen Beanspruchungen umfasst, wobei individuelle Merkmale berücksichtigt werden, die für den vorbestimmten Schritt (400, 500), der nach dem Lasermarkierungsschritt (300) auf der Oberfläche (12) stattfindet, spezifisch sind, und wobei die Gesamtheit der individuellen Merkmale berücksichtigt wird.

3. Verfahren nach Anspruch 2, **dadurch gekennzeichnet, dass** die individuellen Merkmale für eine Bearbeitungstemperatur (T°ᵢ) und/oder eine Bearbeitungszeit (Tpᵢ) repräsentativ sind.

4. Verfahren nach einem der Ansprüche 1 bis 3, **dadurch gekennzeichnet, dass** der mindestens eine vorbestimmte Schritt, der nach dem Lasermarkierungsschritt (300) stattfindet, ein Schritt des Färbens (400) oder Lackierens (500) des Brillenglases (10) ist.

5. Verfahren nach einem der Ansprüche 1 bis 4, **dadurch gekennzeichnet, dass** es einen Schritt des Überprüfens (600) der Konformität der bei dem Lasermarkierungsschritt (300) ausgeführten Gravuren (24) im Hinblick auf die Sichtbarkeit umfasst, nachdem das Brillenglas (10) zudem dem mindestens einen vorbestimmten Schritt (400, 500), der nach dem Lasermarkierungsschritt (300) stattfindet, unterzogen wurde.

6. Verfahren nach einem der Ansprüche 1 bis 5, **dadurch gekennzeichnet, dass** der bestimmte Betriebspunkt (P_{F}) einen Wert umfasst, der für einen Enddurchmesser (D_{F}) der Gravuren (24) und/oder eine Endtiefe (Pr_{F}) der Gravuren (24) repräsentativ ist.

7. Verfahren nach einem der Ansprüche 1 bis 6, **dadurch gekennzeichnet, dass** die Gravuren (24) jeweils eine im Wesentlichen kreisförmige Grundform aufweisen und jeweils durch eine Vertiefung (27) gebildet sind, um die herum ein Rand (26) ausgebildet ist.

8. Verfahren nach einem der Ansprüche 1 bis 7, **dadurch gekennzeichnet, dass** der mindestens eine Bearbeitungsbereich (25) auf der Oberfläche (12) in einem im Wesentlichen ringförmigen Bereich um eine Gravur (24) herum gelegen ist.

9. Lasermarkierungsmaschine, die dazu konfiguriert ist, permanente Gravuren (24) auf einer Oberfläche (12) eines Brillenglases (10) auszuführen, und eine Steuerungs- und Überwachungseinheit (2) umfasst, die Systemelemente (3, 4, 5) umfasst, die dazu konfiguriert sind, ein Computerprogramm auszuführen, das Befehle umfasst, die dazu konfiguriert sind, jeden der Schritte des Verfahrens nach einem der Ansprüche 1 bis 8 zu implementieren.

10. Maschine nach Anspruch 9, **dadurch gekennzeichnet, dass** es sich um eine Lasermarkierungsmaschine (1) vom CO₂-Typ handelt, die dazu konfiguriert ist, Lichtstrahlungen mit einer Wellenlänge zwischen etwa 8 µm und etwa 20 µm zu emittieren.

## Claims

1. Process for manufacturing an ophthalmic lens (10) comprising a laser-marking step (300) for producing permanent engravings (24) on a surface (12) of said ophthalmic lens (10), at least one predetermined step (400, 500) subsequent to said laser-marking step (300) and implementing severe thermal stresses that are applied to said surface (12) and a step of determining an operating point (P_{F}) of a laser-marking machine (1) configured to implement said laser-marking step (300) based on geometric characteristics (Di) of said engravings (24) to be produced on said surface (12), **characterized in that** said step of determining said operating point (P_{F}) includes the following steps:
- determining (304) a value (C_{PM}) representative of the deformation of said ophthalmic lens (10) in at least one treatment zone (25) of said surface (12) in which said engravings (24) are produced, from said severe thermal stresses and from data relating to a predetermined material from which said ophthalmic lens (10) is formed; and
- deducing (308) said operating point (P_{F}) from said value (C_{PM}) representative of the deformation of said ophthalmic lens (10) in said at least one treatment zone (25) and from said geometric characteristics (Di) of said engravings (24);
said step of determining said operating point (P_{F}) comprising the following steps:
- deducing (305) a post-marking stress level (A-G) from the value (C_{PM}) representative of the deformation of said ophthalmic lens (10) and said geometric characteristics (Di) of said engravings (24); and
- selecting (308) said operating point (P_{F}) on the basis of said difficulty level (A-G), of geometric characteristics (x, y, z) of said surface (12) of said ophthalmic lens (10) to be marked and of parameters specific to said laser-marking machine (1) used;
wherein said post-marking stress level (A-G) is chosen from a plurality of post-marking stress levels (A-G) predetermined as a function of predetermined ranges of geometric engraving characteristics (Dᵢ) and predetermined ranges of values (C_{PM}) representative of the deformation of the ophthalmic lens.

2. Process according to Claim 1, **characterized in that** said step of determining the value (C_{PM}) representative of the deformation of said ophthalmic lens (10) in said at least one treatment zone (25) includes the step of processing characteristics (T°ᵢ, Tpᵢ) of said severe thermal stresses while taking into account individual characteristics specific to each said predetermined step (400, 500) subsequent to said step (300) of laser marking the surface (12), all of said individual characteristics being taken into account.

3. Process according to Claim 2, **characterized in that** said individual characteristics are representative of a treatment temperature (T°ᵢ) and/or a treatment time (Tpi).

4. Process according to any one of Claims 1 to 3, **characterized in that** said at least one predetermined step subsequent to said laser-marking step (300) is a step (400) of coloring or a step (500) of varnishing said ophthalmic lens (10).

5. Process according to any one of Claims 1 to 4, **characterized in that** it includes a step (600) of checking the conformity, in terms of visibility, of the engravings (24) produced in said laser-marking step (300), after said ophthalmic lens (10) has furthermore undergone said at least one predetermined step (400, 500) subsequent to said laser-marking step (300).

6. Process according to any one of Claims 1 to 5, **characterized in that** said determined operating point (P_{F}) includes a value representative of a final diameter (D_{F}) of said engravings (24) and/or a final depth (Pr_{F}) of said engravings (24).

7. Process according to any one of Claims 1 to 6, **characterized in that** said engravings (24) each have a substantially circular general shape and are each formed by a recess (27) around which extends a rim (26).

8. Process according to any one of Claims 1 to 7, **characterized in that** said at least one treatment zone (25) of the surface (12) is located in a substantially annular zone around one said engraving (24).

9. Laser-marking machine configured to produce permanent engravings (24) on a surface (12) of an ophthalmic lens (10) and including a command/control unit (2) including system elements (3, 4, 5) configured to run a computer program including instructions configured to implement each of the steps of the process according to any one of Claims 1 to 8.

10. Machine according to Claim 9, **characterized in that** it is a question of a laser-marking machine (1) employing a CO₂ laser configured to emit light radiation of wavelength comprised between about 8 µm and about 20 µm.
